# EUROPÄISCHE PATENTANMELDUNG

(11) **EP 0 780 707 A1**
(43) Veröffentlichungstag der Anmeldung: **25.06.1997**
(21) Anmeldenummer: 96120168.8
(22) Anmeldetag: 18.12.1996
(51) Int. Cl.: G02B 1/10, G02B 6/10, G02B 6/38

(54) **Bauteil für die Übertragung energiereicher UV-Strahlung und Verfahren zur Herstellung eines solchen Bauteils und seine Verwendung**

(30) Priorität: 21.12.1995 DE 19547904; 23.05.1996 JP 128625/96
(71) Anmelder: Heraeus Quarzglas GmbH, D-63450 Hanau (DE)
(72) Erfinder: Klein, Karl-Friedrich, D-61169 Friedberg (DE); Hillrichs, Georg c/o FH Merseburg Fachbereich 1, D-06217 Merseburg (DE); Grzesik, Ulrich Dr., D-63579 Freigericht (DE); Shigeru, Yamagata, Fukushima (JP)
(74) Vertreter: Staudt, Armin Walter

(57) **Zusammenfassung**

Es ist ein optisches Bauteil (1) für die Übertragung von energiereicher UV-Strahlung bekannt, das einen Übertragungsbereich aus synthetisch hergestelltem Quarzglas aufweist, in dem Wasserstoff und/oder Deuterium in einer Konzentration von mindestens 5 x 10¹⁹ Molekülen/cm³ enthalten sind, und der mindestens teilweise mit einer wasserstoffundurchlässigen oder einer die Wasserstoffdiffusion hemmenden ersten Sperrschicht (3) umhüllt ist. Um hiervon ausgehend ein Bauteil (1) anzugeben, dessen mechanische und optische Eigenschaften beim praktischen Einsatz über einen langen Zeitraum erhalten bleiben und das gleichzeitig einfach und kostengünstig herstellbar ist, wird erfindungsgemäß vorgeschlagen, daß die Sperrschicht (3) aus Quarzglas besteht. Zur Einstellung hoher Wasserstoffkonzentrationen im Übertragungsbereich einer optischen Faser synthetischem Quarzglas wird ein Verfahren vorgeschlagen, die Faser mit einer wasserstoffundurchlässigen oder einer die Wasserstoffdiffusion hemmenden Sperrschicht (3) zu beschichten und anschließend in einer wasserstoffhaltigen Atmosphäre unter einem Druck im Bereich von 0,1 MPa bis 200 MPa und bei einer Temperatur zwischen 100 °Cund 800 °C unter Erzeugung einer Wasserstoff-/Deuteriumkonzentration von mindestens 5 x 10¹⁹ Molekülen/cm³ im Übertragungsbereich zu beladen.

## Beschreibung

Die Erfindung betrifft ein optisches Bauteil für die Übertragung von energiereicher UV-Strahlung, das einen Übertragungsbereich aus synthetisch hergestelltem Quarzglas aufweist, in dem Wasserstoff und/oder Deuterium in einer Konzentration von mindestens 5 x 10¹⁹ Molekülen/cm³ enthalten sind, und der mindestens teilweise mit einer wasserstoffundurchlässigen oder einer die Wasserstoffdiffusion hemmenden ersten Sperrschicht umhüllt ist.

Ein derartiges Bauteil ist aus der DE-C1 40 34 059 bekannt. Das darin beschriebene optische Bauteil ist in Form einer Faser mit einem Kern aus synthetischem Quarzglas und einem den Kern umhüllenden Mantel, der eine kleinere Brechzahl als der Kern aufweist, ausgebildet. Das Kernglas des gattungsgemäßen Bauteils ist mit Wasserstoff in einer Konzentration von mindestens 1 x 10¹⁹ Moleküle/cm³ beladen und es weist eine Hydroxyl-Ionen-Konzentration von 600 ppm auf. Zur Verhinderung der Ausdiffusion des Wasserstoffes ist die Faser von einer Diffusionssperrschicht aus Graphit mit einer Dicke von 0,2 µm umhüllt. Eine dichte Graphitschicht vermag zwar effektiv die Ausdiffusion von Wasserstoff zu verhindern, so daß die mechanischen und optischen Eigenschaften der Faser über einen langen Zeitraum erhalten bleiben; das Aufbringen einer solchen Schicht ist aber relativ aufwendig.

Der vorliegenden Erfindung liegt daher die Aufgabe zugrunde, ein Bauteil für die Übertragung energiereicher UV-Strahlung bereitzustellen, bei dem die mechanischen und optischen Eigenschaffen beim praktischen Einsatz über einen langen Zeitraum erhalten bleiben und das gleichzeitig einfach und kostengünstig herstellbar ist.

Weiterhin betrifft die Erfindung ein Verfahren zur Herstellung eines optischen Bauteils für die Übertragung von energiereicher UV-Strahlung durch Bereitstellen einer optischen Faser aus synthetischem Quarzglas oder aus dotiertem, synthetischem Quarzglas, die mit einem Übertragungsbereich für die Übertragung energiereicher UV-Strahlung versehen ist, und Beladen des Übertragungsbereiches mit Wasserstoff und/oder mit Deuterium.

Ein derartiges Verfahren ist aus der JP-A 6-56457 bekannt. Bei dem darin beschriebenen Verfahren wird eine optische Faser in wasserstoffhaltiger Atmosphäre bei einer Temperatur im Bereich zwischen 1000 °C und 2000 °C behandelt. Es hat sich aber gezeigt, daß mit diesem Verfahren hohe Wasserstoff- bzw. Deuteriumkonzentrationen von mindestens 5 x 10¹⁹ Molekülen/cm³ nicht erreichbar sind.

Der Erfindung liegt somit auch die Aufgabe zugrunde, ein Verfahren anzugeben, mit dem hohe Wasserstoff- bzw. Deuteriumkonzentrationen im Übertragungsbereich des optischen Bauteils einstellbar sind.

Weiterhin betrifft die Erfindung eine besondere Verwendungsweise eines optischen Bauteils zur Übertragung von energiereicher UV-Strahlung, wobei das Bauteil einen Übertragungsbereich aus synthetisch hergestelltem Quarzglas aufweist, in dem Wasserstoff und/oder Deuterium in einer Konzentration von mindestens 5 x 10¹⁹ Molekülen/cm³ enthalten sind.

Aus der europäischen Patentanmeldung EP-A1 0 401 845 ist es bekannt, optische Bauteile, beispielsweise Linsen, Prismen, Filter oder Fenster für die Übertragung energiereicher ultravioletter Strahlung im Wellenlängenbereich unterhalb von 360 nm einzusetzen. Die dafür vorgeschlagenen optischen Bauteile bestehen aus hochreinem, synthetischem Quarzglas mit einer Wasserstoffkonzentration im Bereich von 1 x 10¹⁶ Molekülen/cm³ bis 1 x 10²⁰ Molekülen/cm³.

Die mittels optischer Bauteile übertragbaren optischen Leistungs- und Energiedichten sind begrenzt durch materialspezifische Zerstörschwellen, oberhalb von denen die optischen Eigenschaften der Übertragungsmedien irreversibel verändert werden. Es hat sich gezeigt, daß Wasserstoff in der Lage ist, derartige Strahlenschäden in Quarzglas auszuheilen oder zu verhindern. Die gemäß der EP-A1 0 401 845 übertragenen Energiedichten der UV-Strahlung liegen beispielsweise bei etwa 0,1 J/cm^{2.} Impuls (bei Strahlung einer Wellenlänge von 193 nm) bzw. bei etwa 0,4 J/cm^{2.} Impuls (bei Strahlung einer Wellenlänge von 248 nm). Dabei wurde ein Maximum der Strahlenbeständigkeit des Quarzglases gefunden, das je nach Wellenlänge der Strahlung bei einer Wasserstoffbeladung von ca. 1 x 10¹⁸ bis 1 x 10¹⁹ Molekülen/cm³ lag. Bei höheren Wasserstoffkonzentrationen wurde eine Verschlechterung der Strahlenbeständigkeit beobachtet.

Der vorliegenden Erfindung liegt daher insoweit auch die Aufgabe zugrunde, eine für die Übertragung energiereicher UV-Strahlung optimierte Verwendungsweise anzugeben.

Hinsichtlich des optischen Bauteils wird die oben angegebene Aufgabe erfindungsgemäß dadurch gelöst, daß die Sperrschicht aus Quarzglas besteht.

Eine Sperrschicht aus Quarzglas ist besonders einfach herstellbar und im gesamten UV-Wellenlängenbereich bis hinab zu Wellenlängen von ca. 180 nm optisch durchlässig. Die Sperrschicht kann aus einem Quarzglas mit niedrigerem Brechungsindex als das Quarzglas des Übertragungsbereiches ausgebildet sein, wodurch sie zur Lichtführung im Übertragungsbereich beitragen kann. Durch die Sperrschicht kann die Wasserstoffkonzentration im Übertragungsbereich auf hohem Niveau gehalten werden.

Als Übertragungsbereich wird derjenige Bereich des Bauteils verstanden, in dem die UV-Strahlung infolge ihrer Übertragung die höchsten Defektraten erzeugt. Dies ist bei einer Faser beispielsweise der lichtführende Kern, bei einer Linse insbesondere die Einkoppel- und Auskoppelflächen für die Strahlung.

Im Hinblick auf die Strahlenbeständigkeit des Bauteils sind Wasserstoff und Deuterium gleichermaßen wirksam. Sofern im Zusammenhang mit der Beladung des Quarzglases der Ausdruck "Wasserstoff" verwendet wird, so ist dies hier und im folgenden im Sinne von Wasserstoff und/oder Deuterium zu verstehen, sofern nicht ausdrücklich etwas anderes gesagt wird.

Die Ermittlung der Beladung des Quarzglases mit Wasserstoff bzw. mit Deuterium erfolgt spektroskopisch. Dabei wird für die Wasserstoff-Beladung die Grundschwingung bei 2,42 µm und für die Deuterium-Beladung die Grundschwingung bei 3,58 µm verwendet. Zur Ermittlung quantitativer Werte wird in herkömmlicher Art und Weise eine Eichprobe mit bekannter Wasserstoff-bzw. Deuteriumbeladung bei diesen Wellenlängen gemessen und der so ermittelte Meßwert in Beziehung zu dem entsprechenden Meßwert bei der unbekannten Wasserstoff-bzw. Deuteriumkonzentration gesetzt.

Das Bauteil kann mit der Sperrschicht vollständig oder teilweise umhüllt sein. Bei einigen Anwendungen ist es wichtig, daß die Funktionsflächen mit der Sperrschicht versehen sind. Unter Funktionsflächen werden dabei diejenigen Oberflächen des Übertragungsbereiches verstanden, bei denen die UV-Strahlung in das Bauteil eintritt oder aus dem Bauteil austritt oder die zur Führung der UV-Strahlung beitragen, wie beispielsweise das den Kern umhüllende Mantelglas einer optischen Faser. Als optische Bauteile kommen beispielsweise optische Fasern, Linsen, Prismen, Fenster, Maskenplatten oder Filter in Frage.

Als besonders geeignet hat sich ein Bauteil erwiesen, bei dem die Schichtdicke der ersten Sperrschicht zwischen 5% und 50%, vorzugsweise um 20%, der Gesamt-Außenabmesssung von Übertragungsbereich und Sperrschicht beträgt. Dadurch wird die Ausdiffussion von Wasserstoff aus dem Übertragungsbereich behindert. Die Behinderung der Wasserstoff-Ausdiffusion aus dem Übertragungsbereich ist umso wirksamer, je dicker die erste Sperrschicht gewählt wird. Eine definierte Obergrenze für die Schichtdicke gibt es nicht; diese bestimmt sich in erster Linie anhand wirtschaftlicher Erwägungen.

Beispielsweise kann bei einem Bauteil in Form einer optischen Faser die Schichtdicke der ersten Sperrschicht der Dicke des den Faserkern umhüllenden Mantelglases entsprechen, während unter der Gesamt-Außenabmesssung von Übertragungsbereich und Sperrschicht in dem Fall der Außendurchmesser des Mantelglases zu verstehen ist. Der Kern der optischen Faser bildet dabei den Übertragungsbereich. Zwar wird mit zunehmender Dicke der Sperrschicht die Ausdiffusion von Wasserstoff aus der Faser zunehmend gehemmt, dieser positive Effekt wird jedoch bei Dicken der Sperrschicht oberhalb der angegebenen Obergrenze durch die relative Vergrößerung der Querschnittsfläche der Faser auf Kosten des die UV-Strahlung übertragenden Kernbereiches aufgehoben.

Vorteilhafterweise ist eine die erste Sperrschicht umhüllende zweite Sperrschicht vorzusehen, die Aluminium, Chrom, Nickel, Blei, Silber, Gold, Graphit, ein Carbid, ein Nitrid oder ein Oxinitrid, insbesondere Siliziumoxinitrid, enthält. Dadurch wird die Ausdiffussion von Wasserstoff aus dem Übertragungsbereich auch bei hohen Temperaturen behindert oder sogar verhindert und dadurch die Langzeitstabilität der optischen und mechanischen Bauteileigenschaften erhöht. Derartige Sperrschichten lassen sich beispielsweise durch geeignete Gasphasenreaktionen oder durch Kathodenzerstäubung aufbringen.

Besonders bewährt hat sich ein optisches Bauteil, bei dem die erste oder die zweite Sperrschicht Bereiche mit hoher Wasserstoffdurchlässigkeit und Bereiche mit geringer Wasserstoffdurchlässigkeit aufweisen. Die Unterschiede in der Wasserstoffdurchlässigkeiten verschiedener Bereiche der Sperrschicht können dabei auf unterschiedlichen Diffusionskonstanten der für die Sperrschicht eingesetzten Materialien oder auf unterschiedlichen Dicken der jeweiligen Sperrschicht-Bereiche beruhen. Diese Ausführungsform des erfindungsgemäßen optischen Bauteils zeichnet sich dadurch aus, daß die Sperrschicht-Bereiche mit relativ hoher Wasserstoffdurchlässigkeit ein einfaches Beladen des Rohlings mit Wasserstoff erlauben, während die Bereiche mit geringer Wasserstoffdurchlässigkeit die spätere Ausdiffusion während des bestimmungsgemäßen Einsatzes des Bauteiles vermindern. Dieser Effekt ist natürlich umso ausgeprägter, je größer der Unterschied der Wasserstoffdurchlässigkeiten zwischen den jeweiligen Bereichen ist. Es können sowohl die erste als auch die zweite Sperrschicht, als auch beide Sperrschichten entsprechend ausgebildet sein.

Als besonders günstig hinsichtlich der Langzeitstabilität bei der Übertragung sehr hoher Energiedichten hat sich ein Bauteil erwiesen, bei dem die Wasserstoffkonzentration im Übertragungsbereich mindestens 5 x 10²⁰ Moleküle/cm³ beträgt.

Als besonders geeignet hat sich ein Bauteil erwiesen, bei der mindestens die erste Sperrschicht aus mehreren Schichten aufgebaut ist, wovon eine erste Schicht vor einer Beladung des Übertragungsbereiches mit Wasserstoff/Deuterium, und eine zweite Schicht nach der Beladung aufgebracht wird. Ein derartiges Bauteil läßt sich einfach mit Wasserstoff beladen und zeichnet sich durch eine besonders gute Langzeitstabilität aus. Vorteilhafterweise wird hierzu auf dem Rohling, beispielsweise einer Faser, zunächst eine dünne Sperrschicht aufgebracht, um die mechanische Stabilität zu gewährleisten. Danach wird der Rohling mit Wasserstoff beladen, wobei die dünne Sperrschicht eine nur geringe Diffusionsbarriere darstellt. Diese Diffusionsbarriere reicht jedoch aus, um bei weiteren Verfahrensschritten, in denen die Sperrschicht verstärkt wird, die Ausdiffusion von Wasserstoff wirksam zu verhindern. Dies gilt insbesondere dann, wenn die Verstärkung der Sperrschicht bei einer niedrigeren Temperatur erfolgt oder wesentlich schneller durchgeführt werden kann als die Beladung des Bauteils mit Wasserstoff.

In einer anderen bevorzugten Ausführungsform ist das optische Bauteil als optische Faser ausgebildet, mit einem Übertragungsbereich aus synthetisch hergestelltem Quarzglas, und wobei unterhalb der zweiten Sperrschicht eine Kunststoff-Schutzschicht vorgesehen ist. Die Kunststoff-Schutzschicht gewährleistet einen mechanischen Schutz beim Hantieren der Faser, insbesondere beim Beladen mit Wasserstoff. Dabei kann der Wasserstoff leicht durch die Schutzschicht hindurchdiffundieren.

Für die Übertragung von UV-Strahlung einer Wellenlänge kleiner als 270 nm hat sich ein Bauteil als besonders strahlenresistent erwiesen, bei dem der Übertragungsbereich einen OH-Gehalt von höchstens 5 ppm aufweist.

In einer bevorzugten Ausführungsform des Bauteils ist der Übertragungsbereich in Form mindestens einer Faser oder eines Stabes ausgebildet, und mindestens teilweise von einer Hülse umgeben, die ein flüssiges oder ein gasförmiges Kühlmittel enthält. Hiermit läßt sich der Übertragungsbereich auf niedriger Temperatur halten, wodurch die Ausdiffusion von Wasserstoff aus dem Übertragungsbereich verlangsamt wird. Als Kühlmittel kommen Luft, Sauerstoff, Inertgase oder eine geeignete Kühlflüssigkeit in Frage. Es ist nicht erforderlich, daß die Hülse das Bauteil vollständig umgibt. Üblicherweise sind die Stirnflächen der Faser bzw. des Stabes frei zugänglich. Aber auch die Zylindermantelfläche der Faser bzw. des Stabes muß von der Hülse nicht vollständig umgeben sein. Zwischen der Zylindermantelfläche und der Innenseite der Hülse verbleibt ein Spalt, der mit dem Kühlmittel gefüllt ist. Besonders einfach gestaltet sich ein Bauteil, bei dem die Hülse ein rohrförmiges Peltier-Element aufweist. Üblicherweise sind mehrere Peltier-Elemente vorgesehen. Diese können hülsenförmig ausgebildet sein. Mittels des Peltier-Elementes bzw. der Peltier-Elemente ist das Kühlmittel ohne großen apparativen Aufwand kühlbar.

Hinsichtlich des Verfahrens wird die oben angegebene Aufgabe ausgehend von dem eingangs erläuterten Verfahren erfindungsgemäß durch folgende Verfahrensschritte gelöst:
a) Beschichten der Faser mit einer die Wasserstoffdiffusion hemmenden Sperrschicht und
b) Beladen der Faser in einer wasserstoffhaltigen Atmosphäre unter einem Druck im Bereich von 0,1 MPa bis 200 MPa und bei einer Temperatur zwischen 100 °C und 800 °C unter Erzeugung einer Wasserstoff-/Deuteriumkonzentration von mindestens 5 x 10¹⁹ Molekülen/cm³ im Übertragungsbereich.

Erfindungsgemäß wird zunächst eine optische Faser hergestellt, beispielsweise durch Ziehen aus einer Vorform. Anschließend wird die optische Faser mit einer Sperrschicht gegen die Ausdiffussion von Wassserstoff versehen. Bei dieser Sperrschicht kann es sich um Schichten aus Quarzglas oder aus einem der oben genannten metallischen oder keramischen Materialien handeln. Die Sperrschicht muß in Bezug auf die Schichtdicke und das Material so ausgelegt sein, daß anschließend die Durchführung des Verfahrensschritt b) in einem wirtschaftlich sinnvollen Zeitraum, der im Bereich mehrerer Tage liegen kann, noch ermöglicht ist.

Die Sperrschicht erschwert zwar einerseits die Eindiffusion von Wasserstoff während des Verfahrensschrittes b), andererseits behindert sie aber auch die Ausdiffusion von Wasserstoff aus dem Übertragungsbereich, insbesondere bei den höheren Temperaturen des Verfahrensschrittes b). Es hat sich gezeigt, daß bei einem Druck im Bereich von 0,1 MPa bis 200 MPa und bei einer Temperatur zwischen 100 °C und 800 °C die Erschwerung der Eindiffusion mehr als kompensiert wird durch die Behinderung der Ausdiffussion von Wasserstoff.

Die wasserstoffhaltige Atmosphäre kann zu 100 % aus H₂ bzw. D₂ bestehen, oder aus einer Mischung von H₂ bzw. D₂ und einem Inertgas. Bei einem Druck von mehr als 200 MPa wird das Verfahren unwirtschaftlich, ebenso bei einer Temperatur von weniger als 100 °C, aufgrund der dann geringen Diffusionsgeschwindigkeit von Wasserstoff. Bei einer Temperatur von mehr als 800 °C wächst die Gefahr einer Beschädigung der Sperrschicht.

Besonders bevorzugt wird eine Verfahrensweise, bei der die Verfahrensschritte a) und b) mehrmals nacheinander ausgeführt werden, wobei eine aus mehreren, dünneren Teilschichten bestehende Sperrschicht aufgebaut wird, mit der Maßgabe, daß nach dem Aufbringen der obersten Teilschicht der Verfahrensschritt b) entfallen kann.

Die Wasserstoff-Beladung des Übertragunsgbereiches wird erleichtert, wenn vor der erstmaligen Durchführung des Verfahrensschrittes b) der Übertragungsbereich mit Wasserstoff/Deuterum beladen wird.

In einer bevorzugten Verfahrensweise erfolgt das Dotieren bei einer Temperatur zwischen 100 °C und 400 °C. In diesem Temperaturbereich erfolgt die Eindiffusion von Wasserstoff in den Übertragungsbereich ausreichend schnell, ohne daß die Gefahr einer thermischen Beschädigung einer auf dem Bauteil vorhandenen Beschichtung besteht.

Hinsichtlich des Verwendung wird die oben angegebene Aufgabe erfindungsgemäß dadurch gelöst, daß in Abhängigkeit von der Wellenlänge eine Mindestenergiedichte der UV-Strahlung wie folgt eingestellt wird:
bei 193 nm eine Energiedichte von mindestens 1,5 J/cm²,
bei 248 nm eine Energiedichte von mindestens 2,0 J/cm²,
bei 265 nm eine Energiedichte von mindestens 2,5 J/cm² und
bei 308 nm eine Energiedichte von mindestens 3,5 J/cm²,
wobei zur Übertragung einer von einem Laser ausgehenden UV-Strahlung eine Impulslänge der Laserimpulse von mindestens 10 ns vorgesehen wird.

Überraschenderweise wurde gefunden, daß nicht, wie aufgrund der aus dem Stand der Technik bekannten Verfahrens erwartet, bei sehr hohen Wasserstoffkonzentrationen von mindestens 5 x 10¹⁹ Moleküle/cm³ zwangsläufig eine weitere Verschlechterung der Strahlenbeständigkeit des Quarzglases auftritt. Vielmehr hat sich gezeigt, daß sogar eine ausgezeichnete Strahlenbeständigkeit erzielt wird, wenn in Verbindung mit hohen Wasserstoffkonzentrationen im Übertragungsbereich des Bauteils eine UV-Strahlung mit hohen Energiedichten übertragen wird.

Grundsätzlich wird mit zunehmender Energiedichte eine Verschlechterung der Strahlenbeständigkeit des Bauteils beobachtet. Umsomehr überraschte es, daß gerade die Übertragung einer im Vergleich zum gattungsgemäßen Verfahren sehr hohen Energiedichte in einem ausgezeichneten Lebensdauerverhalten des für die Übertragung verwendeten optischen Bauteils resultierte.

Zur Erklärung dieses überraschenden Effektes kann angenommen werden, daßjede UV-Strahlung in Abhängigkeit von der Wellenlänge und der eingestrahlten Energiedichte mit einer spezifischen Defekterzeugungsrate im Quarzglas einhergeht. Diese spezifischen Defekterzeugungsraten sind jeweils korrelierbar mit einem Sättigungswert des Wasserstoffgehaltes. Bei einer Wasserstoffkonzentration unterhalb des Sättigungswertes ist die Ausheilungsrate durch den Wasserstoff zu langsam; bei Wasserstoffkonzentrationen oberhalb des Sättigungswertes könnten sich die überflüssigen Wasserstoffmoleküle nachteilig auswirken. Sie könnten beispielsweise für die Ausheilung relevante Diffusionsmechanismen behindern oder sogar zu einer zusätzlichen Defektentstehung beitragen.

Es hat sich gezeigt, daß bei den oben angegebenen Wellenlängen und Energiedichten diese Sättigungskonzentration an Wasserstoff oberhalb des angegebenen Mindestwertes von 5 x 10¹⁹ Moleküle/cm³ liegt. Dieser Zusammenhang wurde mit Wasserstoffbeladungen bis zu 5 x 10²¹ Moleküle/cm³ als richtig nachgewiesen. Es ist anzunehmen, daß er auch bei noch höheren Wasserstoffkonzentrationen zu beobachten ist. Insbesondere ist zu erwarten, daß bei Energiedichten, die oberhalb der angegebenen Mindestwerte liegen, die Sättigungskonzentration an Wasserstoff jedenfalls oberhalb des angegebenen Mindestwertes liegt.

Die im Anspruch angegebenen Energiedichten werden gemessen, indem die Gesamtenergie der in den Übertragungsbereich eingestrahlten UV-Strahlung auf die Größe der bestrahlten Fläche bezogen wird. Die Fläche kann durch eine Blende festgelegt sein. Bei einer optischen Faser ergibt sich die Fläche durch den Querschnitt des Faserkerns. Die bestrahlte Fläche kann auch mittels eines Strahlenanalysegerätes bestimmt werden. Die zu übertragende UV-Strahlung kann beispielsweise von einem Laser, einem Excimerstrahler oder einer Deuteriumlampe ausgehen.

Es ist davon auszugehen, daß die gleichen Effekte auch bei UV-Strahlung anderer, als im Anspruch genannten Wellenlängen beobachtet werden, wobei sich für die jeweilige UV-Strahlung die Mindestenergiedichte aus den im Anspruch genannten Werten interpolieren läßt.

Im Falle der Übertragung von Laserstrahlung wird die Impulslänge der Laserimpulse auf mindestens 10 ns eingestellt. Die übertragene Energie nimmt linear mit der Impulslänge zu, während zwischen der induzierten Dämpfung und der Impulslänge eine Wurzelabhängigkeit besteht.

Vorteilhafterweise wird die Betriebstemperatur beim bestimmungsgemäßen Einsatz des Bauteils um mindestens 50 °C niedriger gewählt als die Temperatur, die beim Beladen des Bauteil mit Wasserstoff und/oder Deuterium eingestellt worden ist. Durch die niedrigere Betriebstemperatur wird gewährleistet, daß die Ausdiffusion von Wasserstoff aus dem Bauteil langsamer verläuft als die Eindiffusion von Wasserstoff beim Beladen des Rohlings zur Herstellung des Bauteils.

Ausführungsbeispiele der Erfindung werden nachfolgend anhand der Patentzeichnung näher erläutert. In der Zeichnung zeigen im einzelnen
- **Figur 1:**: in schematischer Darstellung einen Längsschnitt durch ein erfindungsgemäßes Bauteil in Form einer Faser in einer ersten Ausführungsform,
- **Figur 2:**: in schematischer Darstellung einen Längsschnitt durch ein erfindungsgemäßes Bauteil in Form einer Faser in einer zweiten Ausführungsform,
- **Figur 3:**: in schematischer Darstellung einen Längsschnitt durch eine optische Linse,
- **Figur 4:**: in schematischer Darstellung einen Längsschnitt durch einen Lichtleitstab,
- **Figur 5:**: einen radialen Querschnitt durch ein erfindungsgemäßes Bauteil in Form eines Lichtleitstabes in einer zweiten Ausführungsform und
- **Figur 6:**: ein Zeitstanddiagramm, das das Lebensdauerverhalten erfindungsgemäßer optischer Bauteile bei Bestrahlung mit UV-Strahlung wiedergibt.

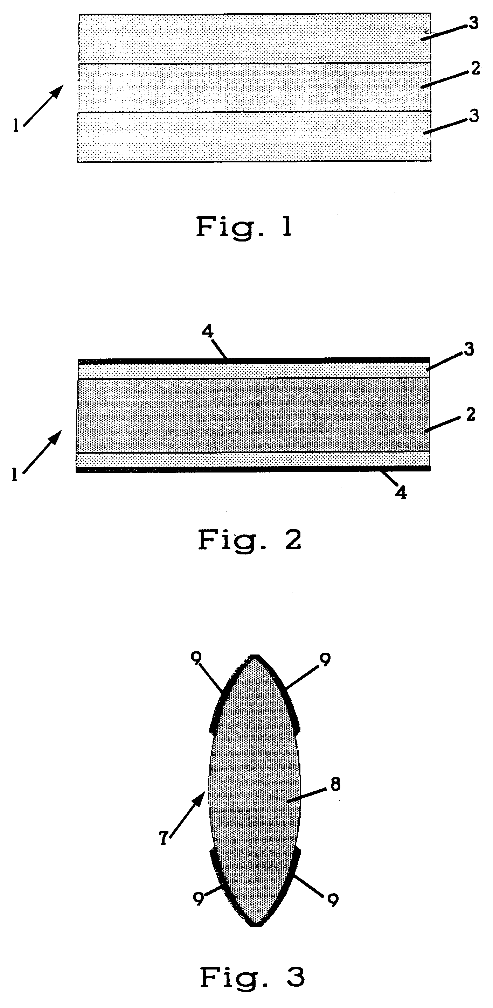

Bei der in **Figur 1** dargestellten Ausführungsform ist das optische Bauteil in Form einer optischen Faser ausgebildet, der insgesamt die Bezugsziffer 1 zugeordnet ist. Die Faser 1 besteht aus einem Kern 2 aus undotiertem, synthetisch hergestelltem Quarzglas. Der Kern 2 ist umhüllt von einem Mantel 3. Der Mantel 3 besteht aus synthetischem Quarzglas, das mit ca. 4 Gew.-% Fluor dotiert ist. Die Faser 1 hat eine Länge von 1m. Der Durchmesser des Kerns 2 der Faser 1 beträgt ca. 200 µm. Der Mantel 3 weist eine Dicke von 100 µm auf. Der Gesamtaußendurchmesser der Faser 1 beträgt somit 400 µm; das Verhältnis der Mantelstärke zum Gesamtaußendurchmesser beträgt 1:4.

Der Kern 2 ist mit Wasserstoff in einer Konzentration von 5 x 10²⁰ Moleküle/cm³ beladen und weist einen Hydroxylionen-Gehalt von ca. 2 ppm auf.

Die Beladung der Faser 1 mit Wasserstoff erfolgte bei einer Temperatur von 80 °C und einem Druck von etwa 30 MPa (300 atm) in wasserstoffhaltiger Atmosphäre. Die Beladungsdauer betrug 200 Stunden.

Die Faser 1 zeichnet sich durch einen großen Kernquerschnitt aus und wird für eine Anwendung im Bereich der Leistungsübertragung energiereicher UV-Strahlung für industrielle Anwendungen, beispielsweise für die Übertragung von Excimerlaserlicht bei Stepper-Maschinen eingesetzt. Hierbei dürfen an die Biegsamkeit der Faser keine hohen Ansprüche gestellt werden. Zur Verhinderung der Ausdiffusion des Wasserstoffes wird hierzu die Faser in einer (in der Figur 1 nicht dargestellten) Hülse geführt, die mittels Peltier-Elementen kühlbar ist. Die übertragene UV-Strahlung hat eine Wellenlänge von 193 nm und eine Energiedichte von ca. 2 J/cm².

Sofern in den nachfolgenden Figuren 2 bis 6 identische Bezugsziffern wie in Figur 1 verwendet werden, sollen diese gleiche oder äquivalente Bauteile bezeichnen, wie sie anhand Figur 1 für die jeweiligen Bezugsziffern erläutert sind.

Bei dem Ausführungsbeispiel gemäß **Figur 2** ist das erfindungsgemäße Bauteil ebenfalls in Form einer optischen Faser 1 ausgebildet. Es weist einen Kern 2 aus Quarzglas, das mit ca. 1 Gew.-% Fluor dotiert ist und einen Mantel 3 aus mit ca. 5 Gew.-% Fluor dotiertem Quarzglas auf. Der Mantel 3 ist umhüllt von einer 0,5 µm dicken Diffusionssperrschicht 4 aus Graphit. Die Faser 1 hat eine Länge von ca. 0,5 m. Der Durchmesser des Kerns 2 der Faser 1 beträgt ca. 50 µm. Der Mantel 3 weist eine Dicke von 2,5 µm auf. Der Gesamtaußendurchmesser der Faser 1 beträgt somit 56 µm.

Der Kern 2 ist mit Deuterium in einer Konzentration von 5 x 10²⁰ Molekülen/cm³ beladen und weist einen Hydroxylionen-Gehalt von ca. 600 ppm auf.

Die Beladung der Faser 1 mit Deuterium erfolgte bei einer Temperatur von 80 °C und einem Druck von etwa 37 MPa (370 atm) in deuteriumhaltiger Atmosphäre. Die Beladungsdauer betrug 200 Stunden.

Die Faser 1 ist zur Anwendung in einem Dentalgerät zur Bestrahlung von Zähnen mit UV-Strahlung einer Wellenlänge von 193 nm bestimmt. Hierzu werden einer Vielzahl der Fasern 1 zu einem Lichtleitbündel zusammengefaßt.

Zur Behandlung von Zähnen wird eine von einem Excimerlaser ausgehende UV-Strahlung einer Wellenlänge von 193 nm und einer Energiedichte von 2 J/cm² übertragen, wobei die Impulslänge der Laserimpulse auf 20 ns und die Repetitionsrate auf 25 Hz eingestellt ist. Dabei konnte auch nach längerer Betriebsdauer, die ca. 2000 Laserimpulsen entspricht, keine Abnahme der anfänglichen Transmission des Quarzglases festgestellt werden. Der Mantel 3 und die Diffusionssperrschicht 4 verhindern die Ausdiffusion von Deuterium und erlauben einen Einsatz der Faser 1 auch bei höheren Temperaturen, beispielsweise um 80 °C.

Die Faser ist auch zum Einsatz im Bereich der Angioplastie geeignet. Hierbei wird üblicherweise mit UV-Strahlung einer Wellenlänge von 308 nm gearbeitet. Zur Herstellung eines Katheters werden mehrere der in **Figur 2** dargestellten Fasern zu einem Faserbündel zusammengefaßt. Es wird eine UV-Strahlung einer Wellenlänge von 308 nm mit einer Energiedichte von 4 J/cm² übertragen. Hierfür wird ein KrF-Excimerlaser eingesetzt, bei dem die Impulslänge der Laserimpulse auf 20 ns und die Repetitionsrate auf 20 Hz eingestellt ist. Die Betriebstemperatur während der Übertragung beträgt ca. 37 °C, die Übertragungsdauer 24 Stunden. Unter diesen Bedingungen wurde bei einer Wellenlänge von 308 nm keine durch die UV-Strahlung erzeugte irreversible Zusatzdämfung des Quarzglases festgestellt.

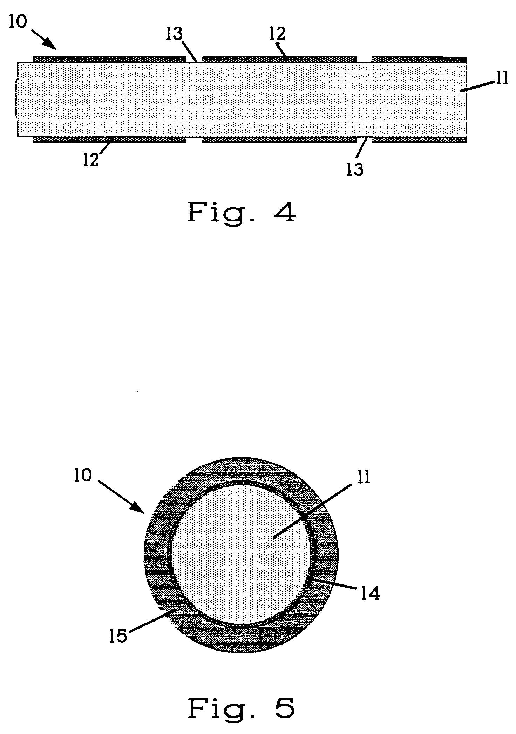

Die erfindungsgemäße Verwendung eines optischen Bauteils wird nachfolgend anhand der Figuren 3 und 4 erläutert. In **Figur 3** ist eine optische Linse 7 aus Quarzglas in einem Querschnitt dargestellt. Die Lichtaustrittsfläche 8 der Linse 7 ist an ihrem äußeren Rand mit einer umlaufenden, geschlossenen Metallschicht 9 aus Aluminium versehen. Diese Metallschicht 9, die nach dem Beladen der Linse 7 durch Kathodenzerstäubung aufgesputtert worden ist, behindert die Ausdiffusion von Wasserstoff aus der Linse 7. Das Quarzglas der Linse 7 ist mit etwa 7,5 x 10²¹ Molekülen/cm³ Wasserstoff beladen.

Die Linse 7 wurde mit einer Excimerlaser-Strahlung der Wellenlänge 265 nm, einer Energiedichte von 3,5 J/cm², mit einer Impulslänge der Laserimpulse von 20 ns und mit einer Repetitionsrate von 20 Hz, 24 Stunden lang bei Raumtemperatur bestrahlt. Danach wurde bei einer Meßwellenlänge von 248 nm eine durch die UV-Strahlung erzeugte irreversible Zusatzdämfung des Quarzglases von lediglich 0,2 dB/m festgestellt.

**Figur 4** zeigt ausschnittsweise einen Längsschnitt durch einen Lichtleitstab 10. Dieser weist einen Lichtleiter 11 auf, der aus einer Vielzahl einzelner Quarzglas-Lichtleitfasern gebildet ist. Sein Außendurchmesser beträgt 1 mm. Der Lichtleiter 11, der eine Wasserstoffkonzentration von 7,5 x 10²¹ Molekülen/cm³ aufweist, ist bereichsweise von einer Schutzhülle 12 umgeben, die aus einem aus der Dampfphase abgeschiedenen Siliziumoxinitrid besteht. Die Schutzhülle 12 läßt ringförmige Öffnungen 13 zum Lichtleiter 11 mit einer Breite von ca. 1 mm frei. Die Schutzhülle 12 weist eine Dicke von 2 µm auf und behindert die Ausdiffusion von Wasserstoff aus dem Lichtleiter 11. Die Schutzhülle 12 kann vor dem Beladen des Lichtleiters 11 mit Wasserstoff aufgebracht werden. Die Öffnungen 13 erlauben die Eindiffusion von Wasserstoff in den Lichtleiter 11.

Bei dem in **Figur 5** gezeigten Querschnitt durch einen dem in Figur 4 dargestellten ähnlichen Lichtleitstab 10, ist die Mantelfläche des Lichtleiters 11 vollständig von einer ersten, dünnen, geschlossenen Schutzschicht 14 und einer zweiten, dicken, geschlossenen Schutzschicht 15 umgeben. Die dünne Schutzschicht 14 weist eine Dicke von 0,5 µm, die dicke Schutzschicht 15 eine Dicke von 3 µm auf. Die Schutzschichten 14; 15, die aus Quarzglas bestehen, das einen kleineren Brechungsindex aufweist, als das Quarzglas des Lichtleiters 11, verhindern die Ausdiffusion von Wasserstoff aus dem Lichtleiter 11 und sie tragen gleichzeitig zur Lichtführung innerhalb des Lichtleiters bei.

Das Beladen des Lichtleiters 11 mit Wasserstoff erfolgt derart, daß zunächst die dünne Schutzschicht 14 auf den Lichtleiter 11 aufgebracht wird. Diese schützt den Lichtleiter 11 vor mechanischen Beschädigungen. Danach wird der Lichtleiter 11, wie oben beschrieben, mit Wasserstoff beladen, und anschließend die dickere Schutzschicht 15 auf die dünne Schutzschicht 14 aufgebracht, die die Ausdiffusion von Wasserstoff verhindert.

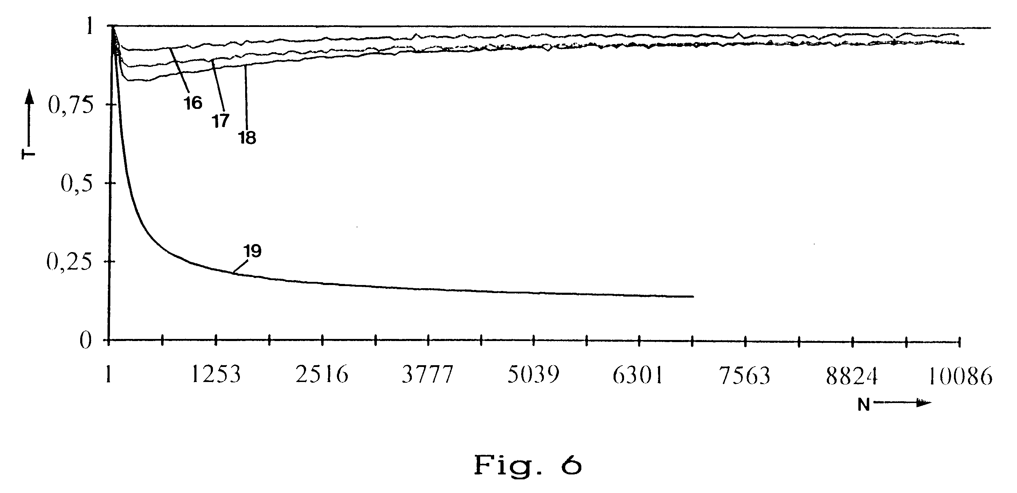

In **Figur 6** ist ein Zeitstanddiagramm von erfindungsgemäßen optischen Fasern im Vergleich zu dem Zeitstanddiagramm einer üblichen optischen Faser dargestellt. Für die Messungen des Zeitstandverhaltens der Fasern wurden in diese UV-Strahlung eine Wellenlänge von 248 nm mittels eines KrF-Excimerlaser eingekoppelt. Die dabei eingestellte Energiedichte der Strahlung betrug 3,0 J/cm², die Impulslänge der Laserstrahlung 15 ns und die Repetitionsrate 20 Hz. Die Faserlänge war jeweils 1 m. Die Geometrie der Fasern entspricht im übrigen derjenigen optischen Faser, wie sie anhand Figur 2 erläutert worden ist. Es wurde die Transmission der Fasern in Abhängigkeit von der Anzahl der Laserimpulse gemessen. In dem Diagramm gemäß Figur 6 ist auf der y-Achse eine auf die Anfangstransmission der Fasern normierte Transmission "T", und auf der x-Achse die Anzahl der Laserimpulse "N" aufgetragen. In dem Diagramm sind die Zeitstandkurven von insgesamt vier unterschiedlichen Fasern eingetragen, die sich lediglich in ihrer Deuteriumkonzentration im Kern unterscheiden.

Die mit der Bezugsziffer 16 bezeichnete Kurve repräsentiert das Zeitstandverhalten einer Faser mit 5 x 10¹⁹ Molekülen/cm³, die Bezugsziffer 17 einer Faser mit 1 x 10²⁰ Molekülen/cm³ und die Bezugsziffer 18 einer Faser mit 5 x 10²⁰ Moleküle/cm³ Deuterium im Kern.

Das Zeitstanddiagramm zeigt deutlich, daß eine Photodegradation bei den erfindungsgemäßen Fasern 16,17,18 nicht auftritt.

Demgegenüber zeigt die handelsübliche optische Faser mit einem mit 5 x 10¹⁸ Molekülen/cm³ Deuterium beladenen Kernglas, deren Zeitstandverhalten durch die Kurve 19 repräsentiert wird, bereits nach ca. 1000 Laserimpulsen eine deutliche, irreversible Abnahme der Transmission.

Das erfindungsgemäße Bauteil ist zur Übertragung von Excimerlaser-Strahlung im medizinischen Bereich, beispielsweise in der Angioplastie, in der Augenheilkunde zur Ablation von Hornhautgewebe oder für die Behandlung von Zähnen geeignet. Weiterhin kommen industrielle Anwendungen der erfindungsgemäßen Bauteile, beispielsweise zur Übertragung von Excimerlaserlicht in Steppermaschinen oder zur Materialbehandlung, sowie in der Spektroskopie zur Übertragung von Deuteriumlampenlicht bei der Kapillarelektrophorese in Frage.

## Patentansprüche

1. Optisches Bauteil für die Übertragung von energiereicher UV-Strahlung, das einen Übertragungsbereich (2; 8; 11) aus synthetisch hergestelltem Quarzglas aufweist, in dem Wasserstoff und/oder Deuterium in einer Konzentration von mindestens 5 x 10¹⁹ Molekülen/cm³ enthalten sind, und der mindestens teilweise mit einer wasserstoffundurchlässigen oder einer die Wasserstoffdiffusion hemmenden ersten Sperrschicht umhüllt ist, dadurch gekennzeichnet, daß die Sperrschicht (3; 14; 15) aus Quarzglas besteht.

2. Optisches Bauteil nach Anspruch 1, dadurch gekennzeichnet, daß die Schichtdicke der ersten Sperrschicht (3; 14; 15) zwischen 5% und 50 %, vorzugsweise um ca. 20%, der Gesamt-Außenabmesssung von Übertragungsbereich (2; 8; 11) und Sperrschicht (3; 14; 15) beträgt.

3. Optisches Bauteil nach Anspruch 1 oder 2, dadurch gekennzeichnet, daß eine zweite Sperrschicht (4; 9; 12) vorgesehen ist, die Aluminium, Chrom, Nickel, Blei, Silber, Gold, Graphit, ein Carbid, ein Nitrid oder ein Oxinitrid, insbesondere Siliziumoxinitrid, enthält.

4. Optisches Bauteil nach Anspruch 3, dadurch gekennzeichnet, daß die erste oder die zweite Sperrschicht Bereiche mit hoher Wasserstoffdurchlässigkeit und Bereiche mit geringer Wasserstoffdurchlässigkeit aufweist.

5. Optisches Bauteil nach Anspruch 3 oder 4, dadurch gekennzeichnet, daß es als optische Faser (1) ausgebildet ist, mit einem Übertragungsbereich (2) aus synthetisch hergestelltem Quarzglas, und daß unterhalb der zweiten Sperrschicht (4) eine Kunststoff-Schutzschicht vorgesehen ist.

6. Optisches Bauteil nach einem vorhergehenden Ansprüche, dadurch gekennzeichnet, daß mindestens die erste Sperrschicht (3; 14; 15) aus mehreren Schichten aufgebaut ist.

7. Optisches Bauteil nach einem der vorhergehenden Ansprüche, dadurch gekennzeichnet, daß es für die Übertragung von UV-Strahlung einer Wellenlänge kleiner als 270 nm der Übertragungsbereich (2; 8; 11) einen OH-Gehalt von höchstens 5 ppm aufweist.

8. Optisches Bauteil nach einem der vorhergehenden Ansprüche, dadurch gekennzeichnet, daß der Übertragungsbereich in Form mindestens einer Faser oder eines Stabes ausgebildet ist, und daß die Faser oder der Stab mindestens teilweise von einer Hülse umgeben sind, die ein flüssiges oder ein gasförmiges Kühlmittel enthält.

9. Optisches Bauteil nach Anspruch 8, dadurch gekennzeichnet, daß die Hülse ein rohrförmiges Peltier-Element aufweist.

10. Optisches Bauteil nach einem der vorhergehenden Ansprüche, dadurch gekennzeichnet, daß die Wasserstoffkonzentration im Übertragungsbereich (2; 8; 11) mindestens 5 x 10²⁰ Moleküle/cm³ beträgt.

11. Verfahren zur Herstellung eines optischen Bauteils für die Übertragung von energiereicher UV-Strahlung durch Bereitstellen einer optischen Faser aus synthetischem Quarzglas oder aus dotiertem, synthetischem Quarzglas, die mit einem Übertragungsbereich für die Übertragung energiereicher UV-Strahlung versehen ist, und Beladen des Übertragungsbereiches mit Wasserstoff und/oder mit Deuterium, gekennzeichnet durch folgende Verfahrensschritte:
a) Beschichten der Faser (1) mit einer wasserstoffundurchlässigen oder einer die Wasserstoffdiffusion hemmenden Sperrschicht (3; 4) und
b) Beladen der Faser (1) in einer wasserstoffhaltigen Atmosphäre unter einem Druck im Bereich von 0,1 MPa bis 200 MPa und bei einer Temperatur zwischen 100 °C und 800 °C unter Erzeugung einer Wasserstoff-/Deuteriumkonzentration von mindestens 5 x 10¹⁹ Molekülen/cm³ im Übertragungsbereich (2; 8; 11).

12. Verfahren nach Anspruch 11, dadurch gekennzeichnet, daß die Verfahrensschritte a) und b) mehrmals nacheinander ausgeführt werden, wobei eine aus mehreren, dünneren Teilschichten bestehende Sperrschicht aufgebaut wird, mit der Maßgabe, daß nach dem Aufbringen der obersten Teilschicht der Verfahrensschritt b) entfallen kann.

13. Verfahren nach Anspruch 11 oder 12, dadurch gekennzeichnet, daß vor der erstmaligen Durchführung des Verfahrensschrittes a) der Übertragungsbereich (2; 8;11) mit Wasserstoff/Deuterium beladen wird.

14. Verfahren nach einem der Ansprüche 11 bis 13, dadurch gekennzeichnet, daß das Dotieren bei einer Temperatur zwischen 100 °C und 400 °C erfolgt.

15. Verwendung eines optsichen Bauteils, das einen Übertragungsbereich aus synthetisch hergestelltem Quarzglas aufweist, in dem Wasserstoff und/oder Deuterium in einer Konzentration von mindestens 5 x 10¹⁹ Molekülen/cm³ enthalten sind, zur Übertragung von energiereicher UV-Strahlung, dadurch gekennzeichnet, daß in Abhängigkeit von der Wellenlänge eine Mindestenergiedichte der UV-Strahlung wie folgt eingestellt wird:
bei 193 nm eine Energiedichte von mindestens 1,5 J/cm²,
bei 248 nm eine Energiedichte von mindestens 2,0 J/cm²,
bei 265 nm eine Energiedichte von mindestens 2,5 J/cm² und
bei 308 nm eine Energiedichte von mindestens 3,5 J/cm²,
wobei zur Übertragung einer von einem Laser ausgehenden UV-Strahlung eine Impulsdauer der Laserimpulse von mindestens 10 ns vorgesehen wird.

16. Verwendung nach Anspruch 15, dadurch gekennzeichnet, daß die Betriebstemperatur beim bestimmungsgemäßen Einsatz des Bauteils (1; 7; 10) um mindestens 50 °C niedriger gewählt wird, als die Temperatur, die beim Beladen des Bauteils (1; 7; 10) eingestellt worden ist.
